# EUROPEAN PATENT APPLICATION

(11) **EP 1 213 498 A2**
(43) Date of publication of application: **12.06.2002**
(21) Application number: 01128729.9
(22) Date of filing: 03.12.2001
(51) Int. Cl.: F16C 1/20

(54) **Flexible control device with articulated elements**

(30) Priority: 06.12.2000 IT MI002644
(71) Applicant: Migliori, Luciano, 20124 Milan (IT)
(72) Inventor: Migliori, Luciano, 20124 Milan (IT)
(74) Representative: Coloberti, Luigi

(57) **Abstract**

A flexible control device of the push-pull type for mechanical power transmissions; the device comprises a flexible member (12) provided by a plurality of cup-shaped elements (17) having a central hole (18); a pull cable (19) is passing through the aligned holes (18) of the cup-shaped elements (17)which freely slide within a sheath (21). Each cup-shaped element (17) comprises semi-spherical inner surface (23), and a partially spherical outer surface (24) meshing with a cylindrical outer surface (25) along the front edge of the cup-shaped element (17). The device is suitable for transmitting high pushing-pulling forces for the remote control of mechanical members and devices.

## Description

### BACKGROUND OF THE INVENTION

This invention refers to mechanical control systems, and more in particular is directed to a control device of the push-pull type, capable of transmitting high pushing and pulling forces between a linear or rotary actuator, such as a pneumatic or hydraulic cylinder or an electric motor, and a mechanical member or device which in turn can be provided with linear or rotary motion, regardless of the type of actuator used.

The control device according to this invention is particularly suitable for use with remote control systems, in which a movement transmitting line can extend on a surface or in the space along any rectilinear, curved and/or circular path, of any length and in any desired direction.

### STATE OF THE ART

Flexible or articulated control devices for a remote controlled movement transmission are widely known and are used in various mechanical fields, for example in the automotive and nautical fields, on machine tools and for other applications; in general, these systems make use of articulated chains, variably composed cables and/or ropes, if necessary sliding in guide sheaths for guiding the cable.

In general, flexible or articulated push-pull control devices of the aforementioned type are prevalently capable of exerting pulling forces, also of a high value, whereas their pushing action proves to be either inexistent or wholly irrelevant due to the flexibility of the connecting cable, rope or chain which extends between the power actuator and the controlled device.

For example, with a usual flexible push-pull transmission device comprising a metal cable sliding within an outer sheath, possibly strengthened by a wire helically wound around the sheath, the amount of thrust that can be exerted generally proves to be extremely limited since, at the most, it can range from 10 to 20% of the pulling force that can be exerted by the same cable. In addition, in flexible transmissions of this kind, the amount of thrust or pushing force is in any case conditioned by the combined bending and compressive stress acting on the inner cable, as well as by the flexibility of the sheath and the inner cable whose radius of curvature, in general, must be of a considerably high value.

Consequently, with the articulated or flexible push-pull devices of the known type it is not possible to obtain remote control systems which extend on a surface or in space along any transmission line, and which at the same time makes it possible to exert pushing and pulling forces of high value, wholly independent from one another, as well as from the path and length of the transmission line itself.

To partially remedy to the problems involved by flexible push-pull devices of the known type, has been suggested to use a cable in combination with profiled or ball shaped members, ad described for example in DE-A-43 08 181, EP-A-0 301 453, GB-A-2178505, FR-A-685616 and DE-A-195 34 643; nevertheless these push-pull devices make use of pushing members of large dimensions, which are to be manufactured by costly machining operations, and again are limiting any possibility to extend along any transmission line on a surface and/or in the space with extremely limited radiuses of curvature or bending angles without affecting the operation of the same device.

Another inherent problem in the flexible control system of the known kind consists in that the pulling cable is not guided at its ends over the entire working stroke, and is consequently subjected to considerable fatigue stress, by bending, in the attachment point to the actuator and to the controlled mechanical member, resulting in its deterioration or rupture after a number of operations.

For these reasons, it is currently necessary to use rigid force-transmission system, or to connect an actuator directly and in close proximity to the controlled device or member to be operated.

For example, by positioning a hydraulic cylinder close to the controlled member in a machine tool, consequently involves considerable problems in terms of consume of space, especially whenever high powered actuators must be used, due to the fact that in general they are considerably larger in dimensions than the working member or device to be controlled.

In an attempt to solve the problems involved by previously known devices, EP-A-1 059 462 suggests the use of a push-pull device of which the present invention constitutes an improvement. In particular EP-A-1 059 462 suggests a push-pull device in which the pushing members are suitably guided over the entire working stroke; nevertheless the pushing members are again in the form of ball or differently shaped members of substantial length or thickness, which do not allow to conform to any force transmitting line having a large amount of flexibility and an extremely reduced bending radius; furthermore the pushing member are again to be manufacture by costly machining operations.

### OBJECTS OF THE INVENTION

The general object of this invention is to provide a flexible control system, of the push-pull type, capable of obviating the above mentioned problems inherent in the flexible or articulated control systems of the known kind.

More in particular, one object of this invention is to provide a flexible control device of the push-pull type, for power transmissions, whereby it is possible to exert both pushing and pulling forces of a high value wholly independent from one another.

A further scope of this invention is to provide a control device, as mentioned previously, which can be used, in particular, for mechanical remote control, in which the force transmitting line can extend for any length on a surface and/or in the space, making it possible to exert pushing and/or pulling forces along rectilinear, curved and/or circular paths with extremely limited radiuses of curvature or bending angles, without negatively affecting the working stroke and the amount of the exerted forces.

A still further object of the invention is to provide a highly versatile and reliable flexible control device which, at the same time, comprises very few cup shaped members which are obtained by simple operations.

### BRIEF DESCRIPTION OF THE INVENTION

All the above can be achieved by means of a control device of the push-pull type, comprising a flexible control member substantially provided by a plurality of face to face arranged cup-shaped elements having a front edge, longitudinally aligned and in close contact with one another, and a pull cable passing through central holes in the aforesaid cup-shaped members, said cup-shaped elements having partially spherical inner and outer surfaces and being freely sliding within an outer guide sheath, characterised in that each cup-shaped element comprises a coining shaped semi-spherical inner surface, and a coining shaped partially spherical outer surface meshing with a cylindrical surface close to the front edge.

### BRIEF DESCRIPTION OF THE DRAWINGS

These and further objects and features of a flexible control device according to the invention, will be more clearly evident from the following description with reference to the accompanying drawings, in which:
Fig. 1 shows a plan view of a push-pull control device according to the invention, suitable for linear movements;
Fig. 2 shows an enlarged sectional detail of the device of figure 1 along a linear portion;
Fig. 3 shows an enlarged cross-sectional view of a cup-shaped element.

### DETAILED DESCRIPTION OF THE INVENTION

With reference to figures from 1 to 3, a description is given hereunder of a preferred embodiment of a control device according to the invention, and one of its possible applications.

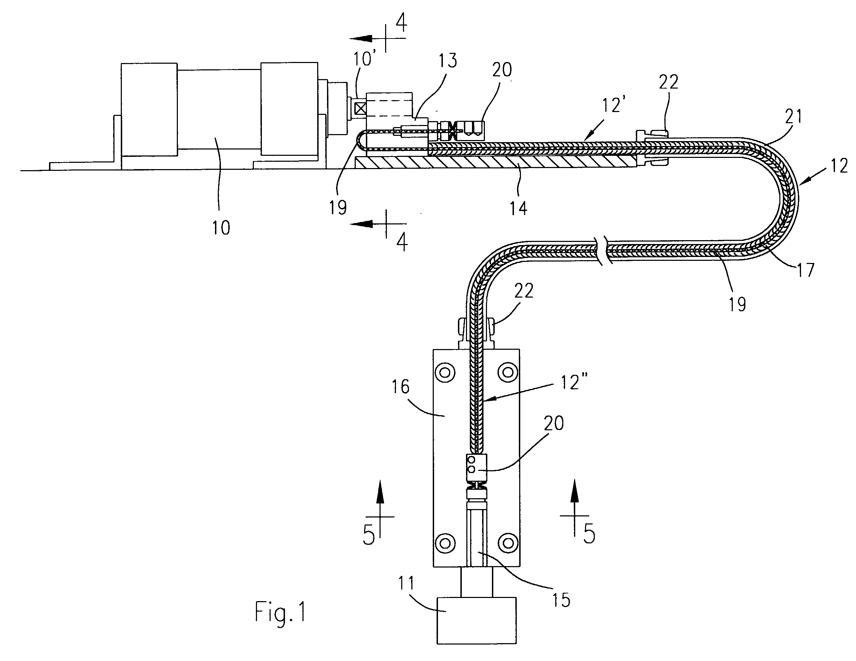

In figure 1, reference 10 indicates a linear actuator, for example a pneumatic or hydraulic cylinder, connected to a member 11 to be controlled, by means of the push-pull control device comprising a flexible force transmission member according to the invention, indicated by reference 12.

More precisely, the rod 10' of the cylinder 10 is connected to the flexible member 12 of the control device, by means of a slider 13 which runs along a guide 14 capable of guiding the slider 13 and an end portion 12' of the same flexible force transmitting member 12 along the entire working stroke.

Likewise, the other end portion 12" of the flexible member 12 of the control device, is connected to the controlled member 11 by means of a second slider 15 moving along a guide 16 which also extends for the entire length of the working stroke.

As shown in the same figure 1, the flexible member 12 can extend along any path defining a transmission line for transmitting movements, having rectilinear and/or curved portions, both on a plane or a surface and in the space, according to need.

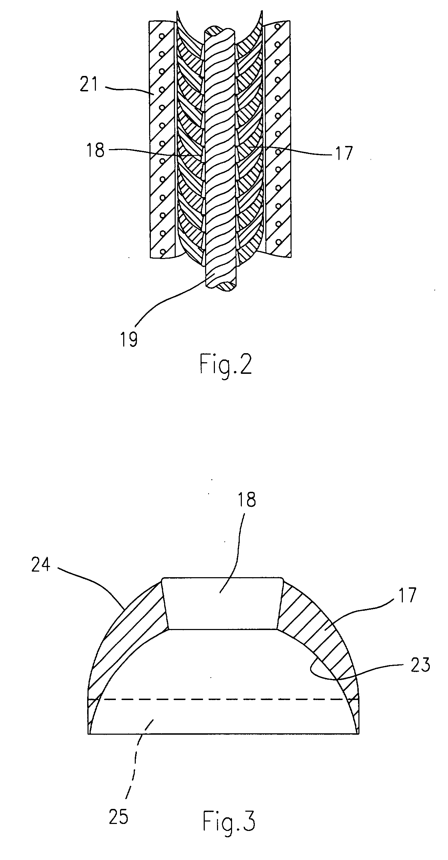

The basic features of the control device according to the invention will be now described in greater detail hereunder with reference to figures 2 and 3 of the accompanying drawings.

As shown in the aforesaid figures, and in figure 1, the flexible force transmitting member 12 of the control device, substantially comprises two structurally independent, albeit functionally integrated, portions; more precisely, it comprises a first portion 17 designed to exert a pushing action or force, and a second portion 19 designed to exert a pulling action or force.

As shown in the detail of figures 2 and 3, the pushing portion of the flexible control device is provided by a plurality of cup-shaped articulated elements 17 having semi-spherical inner and outer coupling surfaces which are maintained in close contact with one another so as to allow any relative angular and/or rotational movement between one pushing element and another, both in the space and on any desired plane or surface.

Each individual pushing element 17 is provided with a central hole 18 to allow the passage of a pull member 19 consisting for example of a metal wire, or of synthetic fibres or any other material, or combination of suitable materials, the ends of which are connected to the sliders 14 and 15, respectively, by means of a clamp 20.

The flexible control member 12, comprising the pushing elements 17 and the pull cable 19, is suitably tensioned by means of the clamps 20 to maintain the articulated pushing elements 17 in close contract with one another, inside a sliding and reaction sheath 21, the ends of which are suitably fastened to the guides 14 and 16, for example by means of a screw nut 22 or in any other suitable way.

Figure 3 of the accompanying drawings shows an enlarged cross-sectional view of a push element 17 constituting part of the flexible control member 12 according to the invention.

As shown in figure 3, the push element 17 comprises a semi-spherical inner surface 23 having a preestablished radius of curvature and its centre on the longitudinal axis of the through hole 18 for passage of the pull cable 19; the cup-shaped element 17 also comprises a partially spherical outer surface 24 which meshes with a cylindrical surface 25 close to the front edge.

Since the outer partially spherical surface 24 of each push element 17 is designed to be in contact in an articulated mode with the inner semi-spherical surface 23 of an adjacent push element 17, the partially spherical surface 24 also presents a radius of curvature corresponding to that of the inner semi-spherical surface 23, whose centre also lies on the longitudinal axis of the hole 18.

The cylindrical surface 25 may be of any desired width, provided it is capable of allowing a wide angular and/or rotational movement or articulation between adjacent cup-shaped elements 17, and in any case sufficient to allow very sharp bends of the flexible control member, of up to 360° and over, thereby also creating possible spiral turns.

In general, as shown, the width of the cylindrical surface 25, in the direction of the axis of the hole 18, must be smaller than the maximum thickness of the semi-spherical wall of the member 17 in the region of the central hole 18. For example, for cup-shaped elements having an external diameter of the cylindrical surface 25 equal to 5.6 mm, and a diameter of the central hole equal to 2.3 mm on the inner surface 26, the maximum thickness of the wall can be 1 mm, with a cylindrical surface 25 having a length equal to or smaller than 0.8 mm.

In figure 3 it can also be seen that, in order to prevent possible interference between the inner surface of the hole 18 and the cable 19 that passes through it, especially in the condition of a minimum radius of curvature of the flexible member 12, the hole 18 presents a conical shape converging towards the inner semi-spherical surface 23. Also in figure 3 it can be seen that the thickness of the wall of the cup-shaped element 17 is progressively reducing from the hole 18 towards the front edge of the surface 25. This has been made possible by manufacturing the cup-shaped elements 17 by coining, starting from a metal disk of appropriate diameter and thickness, provided with a central hole.

The use of the coining technology, as compared to the conventional machining methods, makes it possible to obtain cup-shaped elements wholly identical to one another with the utmost precision, thereby making the entire device more reliable.

From what has been described and shown in the accompanying drawings, it will consequently be clear that what is provided is a control device of the "push and pull" type, to connect an actuator to a control member, which utilises a particular flexible member for transmitting the movement substantially comprising a pull cable which extends within a plurality of cup-shaped push elements articulated to one another, which carry out, in a correlated fashion, differentiated functions of pushing and pulling, making the system totally independent from any type and length of the transmission path, and from the required working stroke.

It is understood, however, that what has been described and shown with reference to the accompanying drawings has been given purely by way of example in order to illustrate several embodiments and possible applications. Consequently, other modifications or variations may be made compared to what has been shown, or the device itself may be used in other different fields of application, without departing from the scopes of the enclosed claims.

## Claims

1. Control device of the push-pull type, comprising a flexible force transmitting member (12) comprising a plurality of face to face arranged cup-shaped elements (17), having a front edge longitudinally aligned and maintained in close contact with one another, and a pull member (19) passing through central holes (18) in the aforesaid cup-shaped elements (17), said cup-shaped elements (17) having partially spherical inner and outer surfaces (23, 24) and being freely sliding within an outer guide sheath (21), **characterised in that** each cup-shaped element (17) comprises a coining shaped semi-spherical inner surface (23), and a coining shaped partially spherical outer surface (24) meshing with a cylindrical outer surface (25) close to the front edge.

2. Control device as claimed in claim 1, **characterised in that** the outer cylindrical surface (25) of the cup-shaped member (17) in the axial direction of the same presents a width smaller than the thickness of the cup-shaped element, in the vicinity of the central hole (18).

3. Control device as claimed in claim 1, **characterised in that** each push element (17) is provided with a central conical hole (18) converging towards the inner semi-spherical surface (23).

4. Control device as claimed in claim 1, **characterised in that** the thickness of the wall of the cup-shaped element (17) is gradually reducing from the central hole (18) to the front edge.
